# EUROPEAN PATENT APPLICATION

(11) **EP 4 471 897 A1**
(43) Date of publication of application: **04.12.2024**
(21) Application number: 23830218.6
(22) Date of filing: 27.06.2023
(51) Int. Cl.: H01M 4/36, H01M 4/38, H01M 4/587, H01M 10/0525

(54) **NEGATIVE ELECTRODE MATERIAL, PREPARATION METHOD THEREFOR AND SECONDARY BATTERY**

(30) Priority: 27.06.2022 CN 202210745341
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: AN, Weili, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2023/102585
(87) International publication number: WO 2024/002041

(57) **Abstract**

The present disclosure relates to the field of anode materials. Provided are an anode material and a preparation method thereof, and a secondary battery. The anode material has a core-shell structure; a core includes a silicon-based active substance; a housing includes a connection layer, a buffer layer, and a protective layer; the connection layer is coated on a surface of the silicon-based active substance; the buffer layer is filled between the connection layer and the protective layer; and the connection layer is connected to the buffer layer through a covalent bond. According to the anode material and the preparation method thereof of the present disclosure, low cost and scalable production is realized, the volumetric expansion of the anode material can reduce, and the structural stability and cyclic stability of the anode material are improved.

## Description

### Cross-Reference to Related Application

This application claims priority to Chinese Patent Application No. 2022107453416 filed to the China National Intellectual Property Administration on June 27, 2022 and entitled "Composite Anode Material and Preparation Method Thereof, and Lithium-Ion Battery", the disclosure of which is hereby incorporated by reference in its entirety.

### Technical Field

The present disclosure relates to the technical field of anode materials, and specifically to an anode material and a preparation method thereof, and a secondary battery.

### Background

Because of the advantages of large energy density, high output power, long cycle life, small environmental pollution, etc., lithium-ion batteries are widely applied to electric vehicles and consumer electronics. In order to increase the energy density of the battery, the research and development of high-capacity anode materials are becoming more mature. However, these anode materials have large volumetric expansion in an alloying process with lithium, and are pulverized during charging and discharging and fall off from a current collector, causing the loss of electrical contact between the anode materials and the current collector, resulting in poor electrochemical performance, capacity fading, and reduction in cyclic stability, and thus being hardly applied commercially.

### Summary

The present disclosure provides an anode material and a preparation method thereof, and a secondary battery, which can reduce volumetric expansion and improve cyclic stability.

In a first aspect, the present disclosure provides an anode material. The anode material has a core-shell structure; a core includes a silicon-based active substance; a housing includes a connection layer, a buffer layer, and a protective layer; the connection layer is coated on a surface of the silicon-based active substance; the buffer layer is filled between the connection layer and the protective layer; and the connection layer is connected to the buffer layer through a covalent bond.

In the above solution, by constructing the connection layer, the buffer layer, and the protective layer on the surface of the silicon-based active substance, and through a synergistic effect thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The buffer layer filled between the connection layer and the protective layer is connected to the connection layer through the covalent bond, such that the falling off of the buffer layer caused by the volumetric expansion of the silicon-based active substance during charging and discharging reduces, excellent mechanical properties of the anode material are maintained, and the structural stability of the anode material is improved, thereby improving cyclic stability.

The present disclosure further provides an anode material. The anode material has a core-shell structure; a core includes a silicon-based active substance; a housing includes a connection layer, a buffer layer, and a protective layer; the connection layer is coated on a surface of the silicon-based active substance; the buffer layer is filled between the connection layer and the protective layer; and an average binding force F between the connection layer and the buffer layer is greater than 8 µN.

In the above solution, by constructing the connection layer, the buffer layer, and the protective layer on the surface of the silicon-based active substance, and through the coordination thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The average binding force between the buffer layer filled between the connection layer and the protective layer and the connection layer is greater than 8 µN, in a cyclic process, the buffer layer is not easy to separate from the connection layer, such that excellent mechanical properties of the anode material are maintained, and the structural stability of the anode material is improved, thereby improving cyclic stability.

The present disclosure further provides an anode material. The anode material has a core-shell structure; a core includes a silicon-based active substance; a housing includes a connection layer and a protective layer; the connection layer is coated on a surface of the silicon-based active substance; the protective layer includes a conductive substrate and a hollow carbon material dispersed in the conductive substrate; and an average binding force F between the connection layer and the hollow carbon material is greater than 8 µN.

In the above solution, by constructing the connection layer and the protective layer on the surface of the silicon-based active substance, and through a synergistic effect thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The conductive substrate of the protective layer can improve the conductivity of the material; the hollow carbon material dispersed in the conductive substrate can buffer the volumetric expansion of the silicon-based active substance, and the average binding force between the hollow carbon material and the connection layer is greater than 8 µN; and in a cyclic process, the hollow carbon material is not easy to separate from the connection layer, such that connection stability between the protective layer and the connection layer can be improved, excellent mechanical properties of the anode material are maintained, and the overall structural stability of the anode material is improved, thereby improving cyclic stability.

In a second aspect, the present disclosure provides a method for preparing an anode material, including the following steps.

A connection layer is formed on a surface of a silicon-based active substance, the connection layer having a modified functional group, so as to obtain a first precursor.

A polymerization reaction is performed on a mixed slurry containing the first precursor and a buffer layer material having a surface functional group, and drying is performed to obtain a second precursor.

The second precursor is coated to obtain an anode material.

In the above solution, by means of forming the connection layer having the modified functional group on the surface of the silicon-based active substance, and then performing the polymerization reaction on the buffer layer material having the surface functional group and the first precursor so as to connect the connection layer and the buffer layer material through the covalent bond, a bonding strength between the buffer layer material and the connection layer may be greatly enhanced, the connection layer and the buffer layer material are effectively tightly connected, and an excellent electrical contact can be guaranteed after volumetric expansion. Finally, coating is performed on the buffer layer, and the formed protective layer further improves the conductivity and structural integrity of the anode material, such that the occurrence of side reactions due to contact with electrolyte may be effectively inhibited. By means of the anode material prepared by the method of the present disclosure, by depending on the high strength and toughness of the buffer layer material, and combining the synergistic effect of the connection layer, the buffer layer, and the protective layer on the silicon-based active substance, the volumetric expansion of silicon may be effectively relieved, the conductivity of a silicon anode is improved, and the stability of a silicon carbon composite structure is improved, thereby improving the cycle life and rate capability of the silicon anode material.

In a third aspect, the present disclosure provides a secondary battery, including the anode material described in the first aspect or an anode material prepared by the method for preparing an anode material described in the second aspect.

Compared to the related art, the technical solutions of the present disclosure have at least the following technical effects.

According to the anode material provided in the present disclosure, by constructing the connection layer, the buffer layer, and the protective layer on the surface of the silicon-based active substance, and through the coordination thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The buffer layer is filled between the connection layer and the protective layer, the buffer layer is connected to the connection layer through the covalent bond, or the average binding force between the buffer layer and the connection layer is greater than 8 µN, such that excellent mechanical properties of the anode material are maintained, and the structural stability of the anode material is improved, thereby improving cyclic stability.

According to the anode material provided in the present disclosure, by constructing the connection layer and the protective layer on the surface of the silicon-based active substance, and through a synergistic effect thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The conductive substrate of the protective layer can improve the conductivity of the material; the hollow carbon material dispersed in the conductive substrate can buffer the volumetric expansion of the silicon-based active substance, and the average binding force between the hollow carbon material and the connection layer is greater than 8 µN; and in a cyclic process, the hollow carbon material is not easy to separate from the connection layer, such that connection stability between the protective layer and the connection layer can be improved, the falling off of the buffer layer caused by the volumetric expansion of the silicon-based active substance during charging and discharging is prevented, excellent mechanical properties of the anode material are maintained, and the overall structural stability of the anode material is improved, thereby improving cyclic stability. According to the preparation method provided in the present disclosure, by means of forming the connection layer having the modified functional group on the surface of the silicon-based active substance, and then performing the polymerization reaction on the buffer layer material having the surface functional group and the first precursor so as to connect the connection layer and the buffer layer material through the covalent bond, a bonding strength between the buffer layer material and the connection layer may be greatly enhanced, the connection layer and the buffer layer material are effectively tightly connected, and an excellent electrical contact can be guaranteed after volumetric expansion. Finally, coating is performed on the buffer layer, and the formed protective layer further improves the conductivity and structural integrity of the anode material, such that the occurrence of side reactions due to contact with electrolyte may be effectively inhibited. By means of the anode material prepared by the method of the present disclosure, by depending on the high strength and toughness of the hollow carbon material in the buffer layer, and combining the synergistic effect of the connection layer, the buffer layer, and the protective layer on the silicon-based active substance, the volumetric expansion of silicon may be effectively relieved, the conductivity of a silicon anode is improved, and the stability of a silicon carbon composite structure is improved, thereby improving the cycle life and rate capability of the silicon anode material.

### Brief Description of the Drawings

Fig. 1 is a schematic structural diagram of an anode material according to this embodiment.
Fig. 2 is another schematic structural diagram of an anode material according to this embodiment.
Fig. 3 is a flowchart of a method for preparing an anode material according to this embodiment.
Fig. 4 is a scanning electron microscope picture of an anode material according to Embodiment 1.
Fig. 5 is a Raman spectrogram of an anode material according to Embodiment 1.
Fig. 6 is a curve of the cycling performance of an anode material according to Embodiment 1.

### Detailed Description of the Embodiments

The following descriptions are merely preferred implementations of the embodiments of the present disclosure, and it should be noted that those of ordinary skill in the art may also make several improvements and refinements without departing from the principle of the embodiments of present disclosure, and it is also considered that these improvements and refinements fall within the protection scope of the embodiments of present disclosure.

At present, in lithium-ion batteries, anode materials are one of the key materials affecting the charge-discharge performance of the lithium-ion batteries. In order to increase the energy density of the battery, the research and development of high-capacity anode materials is becoming more mature. However, these anode materials have large volumetric expansion in an alloying process with lithium, and are pulverized during charging and discharging and fall off from a current collector, causing the loss of an electrical contact between the anode materials and the current collector, resulting in poor electrochemical performance, capacity fading, and reduction in cyclic stability, and thus being hardly applied commercially. In order to improve the cyclic stability of the lithium-ion battery, an embodiment of the present disclosure provides an anode material with low expansion and good stability.

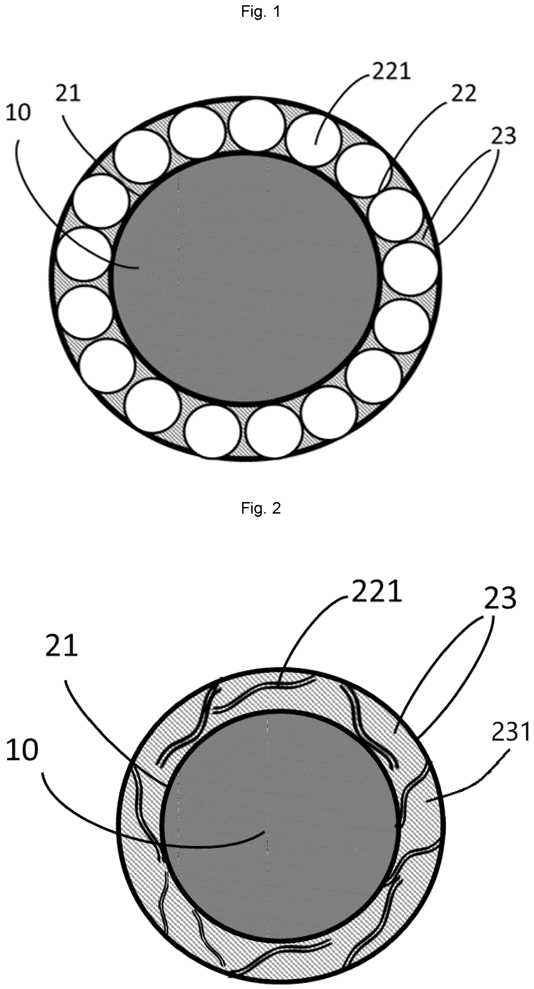

The present disclosure provides an anode material. As shown in Fig. 1, the anode material has a core-shell structure; a core includes a silicon-based active substance 10; a housing includes a connection layer 21, a buffer layer 22, and a protective layer 23; the connection layer 21 is coated on a surface of the silicon-based active substance 10; the buffer layer 22 is filled between the connection layer 21 and the protective layer 23; and the connection layer 21 is connected to the buffer layer 22 through a covalent bond.

In the above solution, by constructing the connection layer, the buffer layer, and the protective layer on the surface of the silicon-based active substance, and through the coordination thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The buffer layer filled between the connection layer and the protective layer is connected to the connection layer through the covalent bond, such that excellent mechanical properties of the anode material are maintained, and the structural stability of the anode material is improved.

In some implementations, the covalent bond includes at least one of a carbon-carbon bond (C-C, C=C), a carbon-oxygen bond (C-O, C=O), a carbon-nitrogen bond (C-N), a carbon-sulfur bond (C-S), a carbon-chlorine bond (C-Cl), a fluorine-carbon bond (C-F), a nitrogen-oxygen bond (O-N), an oxygen-sulfur bond (O-S), an oxygen-chlorine bond (O-Cl), or a nitrogen-sulfur bond (N-S).

In some implementations, the core is the silicon-based active substance, and the silicon-based active substance is a primary particle.

In some implementations, the silicon-based active substance includes at least one of Si, SiOₓ, or silicon alloy, where 0<x<2; the SiOₓ may specifically be SiO_{0.1}, SiO_{0.2}, SiO_{0.3}, SiO_{0.4}, SiO_{0.6}, SiO_{0.8}, SiO, SiO_{1.2}, SiO_{1.5}, SiO_{1.8}, or SiO_{1.9}, or the like, and is not limited herein. The silicon alloy may be a ferro-silicon alloy particle, a silicon-cobalt alloy particle, a silicon-nickel alloy particle, a silicon-copper alloy particle, a silicon-platinum alloy particle, or a silicon-gold alloy particle.

In some implementations, a median particle diameter of the silicon-based active substance is 0.2 µm-20 µm, may specifically be 0.2 µm, 0.5 µm, 1 µm, 2 µm, 5 µm, 10 µm, 15 µm, or 20 µm, and is not limited herein.

In some implementations, the connection layer includes at least one of polymer, an amorphous carbon material, or a graphitized carbon material.

In some implementations, as shown in Fig. 1, the buffer layer includes a hollow carbon material 221.

In some implementations, by using a Focused Ion Beam microscope (FIB-SEM), an X-ray photoelectron spectroscopy, an electron energy loss spectroscopy, or an infrared absorption spectrometer for detection, there are various covalent bonds at a junction of the connection layer and the hollow carbon material in the buffer layer, including at least one of a carbon-carbon bond (C-C, C=C), a carbon-oxygen bond (C-O, C=O), a carbon-nitrogen bond (C-N), a carbon-sulfur bond (C-S), a carbon-chlorine bond (C-Cl), a fluorine-carbon bond (C-F), a nitrogen-oxygen bond (O-N), an oxygen-sulfur bond (O-S), an oxygen-chlorine bond (O-Cl), or a nitrogen-sulfur bond (N-S).

In a second aspect, the present disclosure provides an anode material. The anode material has a core-shell structure; a core includes a silicon-based active substance; a housing includes a connection layer, a buffer layer, and a protective layer; the connection layer is coated on a surface of the silicon-based active substance; the buffer layer is filled between the connection layer and the protective layer; and an average binding force F between the connection layer and the buffer layer is greater than 8 µN.

A method for testing the average binding force F between the connection layer and the buffer layer includes: measuring minimum pulling forces required to detach 5 hollow carbon materials from the connection layer by using a nano mechanical testing system and a probe testing system, and taking an average value as the average binding force.

It may be understood that, if the average binding force is greater, it may ensure that the buffer layer is in firm contact with the connection layer, such that huge stress generated due to the embedding of lithium in the silicon-based active substance reduces to cause the buffer layer to separate from the connection layer, so as to improve electron conduction; the hollow carbon material in the buffer layer may effectively relieve the volumetric expansion of silicon; and the tight binding between the buffer layer and the connection layer may also reduce material polarization, such that contact resistance reduces, and lithium ion transmission is accelerated, thereby achieving high capacity and high rate capability.

In some implementations, the buffer layer includes at least one of a hollow carbon ball, a hollow carbon rod, or a hollow carbon tube.

In some implementations, the hollow carbon material includes the hollow carbon ball, a diameter of the hollow carbon ball is 20 nm-2000 nm, and a wall thickness of the hollow carbon ball is 5 nm-500 nm. The diameter may specifically be 20 nm, 50 nm, 80 nm, 100 nm, 200 nm, 500 nm, 800 nm, 1000 nm, 1500 nm, or 2000 nm, etc.; and the wall thickness may specifically be 5 nm, 50 nm, 80 nm, 100 nm, 150 nm, 200 nm, 250 nm, 300 nm, 450 nm, or 500 nm, etc., and is not limited herein.

In some implementations, the hollow carbon material includes the hollow carbon rod, a diameter of the hollow carbon rod is 10 nm-1000 nm, a length of the hollow carbon rod is 100 nm-3000 nm, and a wall thickness of the hollow carbon rod is 5 nm-500 nm. The diameter may specifically be 10 nm, 50 nm, 80 nm, 100 nm, 200 nm, 500 nm, 600 nm, 700 nm, 850 nm, or 1000 nm, etc.; the length may specifically be 100 nm, 200 nm, 400 nm, 500 nm, 800 nm, 1000 nm, 2000 nm, 2500 nm, or 3000 nm, etc.; and the wall thickness may specifically be 5 nm, 50 nm, 80 nm, 100 nm, 150 nm, 200 nm, 250 nm, 300 nm, 450 nm, or 500 nm, etc., and is not limited herein.

In some implementations, the hollow carbon material includes the hollow carbon tube, a diameter of the hollow carbon tube is 20 nm-400 nm, a length of the hollow carbon tube is 30 nm-20 um, and a wall thickness of the hollow carbon tube is 5 nm-100 nm. The diameter may specifically be 20 nm, 50 nm, 80 nm, 100 nm, 200 nm, 250 nm, 300 nm, 350 nm, 380 nm, or 400 nm, etc.; the length may specifically be 30 nm, 50 nm, 100 nm, 200 nm, 400 nm, 500 nm, 800 nm, 1 um, 8 um, 10 um, 15 um, or 20 um, etc.; and the wall thickness may specifically be 5 nm, 10 nm, 25 nm, 30 nm, 35 nm, 40 nm, 45 nm, or 50 nm, etc., and is not limited herein.

In some implementations, a ratio of a thickness of the buffer layer to a median particle diameter D50 of the silicon-based active substance is 1:(0.5-10), may specifically be 1:0.5, 1:0.7, 1:0.8, 1:0.9, 1:1.0, 1:1.5, 1:2.0, 1:3, 1:5, 1:6, 1:8, or 1:10, etc., and is not limited herein. Preferably, the ratio of the thickness of the buffer layer to the median particle diameter D50 of the silicon-based active substance is 1:(1-8).

In some implementations, the protective layer is coated on a surface of the buffer layer.

In some implementations, the protective layer is coated on the surface of the buffer layer, and at least part of the protective layer is filled in a gap between the hollow carbon materials.

In some implementations, the protective layer includes at least one of polymer, an amorphous carbon material, or a graphitized carbon material.

In some implementations, a thickness of the connection layer is 5 nm-200 nm, may specifically be 5 nm, 10 nm, 30 nm, 50 nm, 80 nm, 100 nm, 150 nm, 180 nm, or 200 nm, etc., and is not limited herein.

In some implementations, a thickness of the protective layer is 5 nm-500 nm, may specifically be 5 nm, 50 nm, 80 nm, 100 nm, 150 nm, 200 nm, 250 nm, 300 nm, 450 nm, or 500 nm, etc., and is not limited herein.

In some implementations, the protective layer includes at least one of an amorphous carbon material or a graphitized carbon material; and a mass content of carbon in the protective layer in the anode material is 1%-50%, preferably 5%-25%.

In some implementations, the protective layer is a carbon layer constituted by the amorphous carbon material, a mass content of the carbon layer in the anode material is 2%-25%, and a mass content of oxygen in the carbon layer is less than 5%.

In some implementations, the protective layer is a carbon layer constituted by the graphitized carbon material, a mass content of the carbon layer in the anode material is 2%-15%, and a mass content of oxygen in the carbon layer is less than 3%.

In some implementations, the graphitized carbon material is modified graphene containing a doped element, and the doped element includes at least one of oxygen, nitrogen, or sulfur.

In some implementations, the graphitized carbon material is the modified graphene containing a doped element, the number of layers of the modified graphene is less than 10, and if the number of layers of the modified graphene is too many, the thickness of the protective layer is too large, and a carbon content is too high, thus not facilitating the improvement of the rate capability of the material.

In some implementations, a mass content of the doped element in the graphitized carbon material is 1%-20%, may specifically be 1%, 3%, 4%, 5%, 6%, 7%, 10%, 12%, 15%, 18%, or 20%, etc., and is not limited herein. The conductivity of the graphitized carbon material having the doped element may be significantly improved.

In some implementations, the protective layer includes the polymer, and the polymer includes at least one of diblock copolymer, triblock copolymer, or multiblock copolymer.

In some implementations, a mass content of the polymer in the anode material is 1%-20%, may specifically be 1%, 3%, 5%, 8%, 10%, 12%, 15%, or 20%, etc., and is not limited herein.

In some implementations, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, or tannic acid. The polymer preferably is at least one of the polypyrrole, the polythiophene, the polyaniline, the polyaniline, and the polyacetylene.

In a third aspect, the present disclosure provides an anode material. As shown in Fig. 2, the anode material has a core-shell structure; a core includes a silicon-based active substance 10; a housing includes a connection layer 21 and a protective layer 23; the connection layer 21 is coated on a surface of the silicon-based active substance 10; the protective layer 23 includes a conductive substrate 231 and a hollow carbon material 221 dispersed in the conductive substrate 231; and an average binding force F between the connection layer 21 and the hollow carbon material 221 is greater than 8 µN.

In the above solution, by constructing the connection layer and the protective layer on the surface of the silicon-based active substance, and through a synergistic effect thereof, volumetric expansion of the silicon-based active substance is effectively relieved, the structural stability of the silicon carbon anode material is improved, and cycle life is prolonged. The connection layer on the surface of the silicon-based active substance may greatly improve the conductivity of the material, the occurrence of side reactions reduces, and lithium ion and electron transport channels are enhanced, such that the conductivity of the anode material is improved, and the rate capability of the material is improved. The conductive substrate of the protective layer can improve the conductivity of the material; the hollow carbon material dispersed in the conductive substrate can buffer the volumetric expansion of the silicon-based active substance, and the average binding force between the hollow carbon material and the connection layer is greater than 8 µN; and in a cyclic process, the hollow carbon material is not easy to separate from the connection layer, such that connection stability between the protective layer and the connection layer can be improved, excellent mechanical properties of the anode material are maintained, and the overall structural stability of the anode material is improved, thereby improving cyclic stability.

In some implementations, the conductive substrate includes at least one of polymer, an amorphous carbon material, or a graphitized carbon material. The selection of the polymer, the amorphous carbon material, and the graphitized carbon material is not described herein again, which is the same as that of the anode material described in the first aspect.

In some implementations, the protective layer is coated on a surface of the connection layer.

In some implementations, the connection layer and the protective layer both include the polymer.

In some implementations, the connection layer and the protective layer both include the amorphous carbon material.

In some implementations, the connection layer and the protective layer both include the graphitized carbon material.

It may be understood that, when materials of the connection layer and the protective layer are the same, the binding force between the connection layer and the protective layer is stronger, more facilitating the fixing of the hollow carbon material between the connection layer and the protective layer, such that separation of the hollow carbon material from the connection layer during charging and discharging reduces.

In some implementations, a mass content of carbon in the anode material is 5%-80%, may specifically be 5%, 8%, 10%, 15%, 18%, 20%, 30%, 35%, 40%, 45%, 50%, or 80%, etc., and is not limited herein. It is to be noted that, the carbon in the anode material is derived from carbon in the connection layer, the buffer layer, and the protective layer.

In some implementations, a mass content of oxygen in the anode material is less than 20%, may specifically be 5%, 6%, 8%, 10%, 12%, 15%, 18%, or 19%, etc., and is not limited herein.

In some implementations, a powder tap density of the anode material is 0.2 g/cm³-1.2 g/cm³, for example, 0.2 g/cm³, 0.3 g/cm³, 0.5 g/cm³, 0.6 g/cm³, 0.7 g/cm³, 0.8 g/cm³, 1.0 g/cm³, or 1.2 g/cm³, etc, preferably is 0.5 g/cm³ -0.8 g/cm³.

In some implementations, a powder compaction density of the anode material is 1.2 g/cm³-1.8 g/cm³, for example, 1.2g/cm³, 1.3g/cm³, 1.4g/cm³, 1.5g/cm³, 1.6g/cm³, or 1.8g/cm³, etc., preferably is 1.45 g/cm³ -1.75 g/cm³.

In some implementations, a median particle diameter of the anode material is 0.2 µm-20 µm, and optionally, the median particle diameter of the anode material may specifically be 0.2 µm, 0.5 µm, 1 µm, 3 µm, 4 µm, 5 µm, 7 µm, 10 µm, 13 µm, 15 µm, or 20 µm, etc., and is not limited herein. The median particle diameter of the anode material preferably is 0.5 µm-10 µm, and more preferably is 1 µm-5 µm.

A specific surface area of the anode material is 1 m²/g-50 m²/g. Optionally, the specific surface area of the anode material may be 1 m²/g, 5 m²/g, 8 m²/g, 10 m²/g, 15 m²/g, 20 m²/g, 25 m²/g, 30 m²/g, 35 m²/g, 40 m²/g, 45 m²/g, or 50 m²/g, etc., and is not limited herein. It may be understood that, the smaller the specific surface area, the better; the formation of an SEI is easily caused by a too large specific surface area, an irreversible lithium salt is consumed too much, and the first time efficiency of a battery reduces, such that, by comprehensively considering the cost of a preparation process, the specific surface area is controlled between 2 m²/g and 15 m²/g.

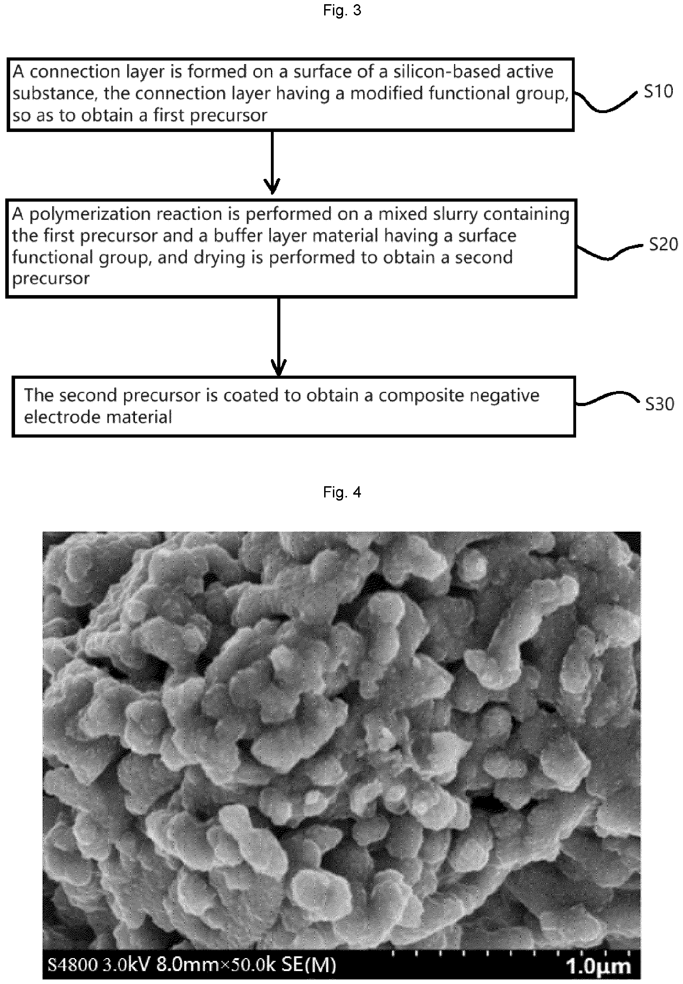

The present disclosure further provides a method for preparing an anode material. As shown in Fig. 3, the method includes the following steps.

At S10, a connection layer is formed on a surface of a silicon-based active substance, the connection layer having a modified functional group, so as to obtain a first precursor.

At S20, a polymerization reaction is performed on a mixed slurry containing the first precursor and a buffer layer material having a surface functional group, and drying is performed to obtain a second precursor.

At S30, the second precursor is coated to obtain an anode material.

The anode material prepared by the method has a core-shell structure; a core includes a silicon-based active substance; a housing includes a connection layer, a buffer layer, and a protective layer; the connection layer is coated on a surface of the silicon-based active substance; and the buffer layer is filled between the connection layer and the protective layer.

In this solution, by means of forming the connection layer having the modified functional group on the surface of the silicon-based active substance, and then performing the polymerization reaction on the buffer layer material having the surface functional group and the first precursor so as to connect the connection layer and the buffer layer material through the covalent bond, a bonding strength between the buffer layer material and the connection layer may be greatly enhanced, the connection layer and the buffer layer material are effectively tightly connected, and an excellent electrical contact can be guaranteed after volumetric expansion. Finally, coating is performed on the buffer layer, and the formed protective layer further improves the conductivity and structural integrity of the anode material, such that the occurrence of side reactions due to contact with electrolyte may be effectively inhibited. By means of the anode material prepared by the method of the present disclosure, by depending on the high strength and toughness of the buffer layer material, and combining the synergistic effect of the connection layer, the buffer layer, and the protective layer on the silicon-based active substance, the volumetric expansion of silicon may be effectively relieved, the conductivity of a silicon anode is improved, and the stability of a silicon carbon composite structure is improved, thereby improving the cycle life and rate capability of the silicon anode material.

The preparation method of the present disclosure is specifically introduced with reference to embodiments.

At S10, the connection layer is formed on the surface of the silicon-based active substance, the connection layer having the modified functional group, so as to obtain the first precursor.

In some implementations, the silicon-based active substance is a primary particle.

In some implementations, the silicon-based active substance includes at least one of Si, SiOₓ, and silicon alloy, where 0<x<2; the SiOₓ may specifically be SiO_{0.1}, SiO_{0.2}, SiO_{0.3}, SiO_{0.4}, SiO_{0.6}, SiO_{0.8}, SiO, SiO_{1.2}, SiO_{1.5}, SiO_{1.8}, or SiO_{1.9}, and is not limited herein. The silicon alloy may be a ferro-silicon alloy particle, a silicon-cobalt alloy particle, a silicon-nickel alloy particle, a silicon-copper alloy particle, a silicon-platinum alloy particle, or a silicon-gold alloy particle.

In some implementations, a median particle diameter D50 of the silicon-based active substance is 0.2 µm-20 µm, may specifically be 0.2 µm, 0.5 µm, 1 µm, 2 µm, 5 µm, 10 µm, 15 µm, or 20 µm, and is not limited herein.

In some implementations, the manner of modifying the connection layer may be gas modification and/or liquid phase modification.

In some implementations, S10 includes: in a protective atmosphere, a gas phase carbon source is deposited on the surface of the silicon-based active substance by means of vapor deposition, so as to obtain a compound, and a modified gas is used to cause a connection layer on a surface of the compound to have a modified functional group.

In some implementations, a heating rate of vapor deposition is 1 °C/min-20 °C/min, for example, may be 1 °C/min, 3 °C/min, 5°C/min, 8°C/min, 10 °C/min, 15 °C/min, or 20°C/min, and is not limited herein.

In some implementations, a temperature of vapor deposition is 600 °C-1000 °C, and may specifically be 400 °C, 500 °C, 600 °C, 700 °C, 800 °C, or 1000 °C.

In some implementations, the gas phase carbon source includes at least one of acetylene, methane, toluene, cyclohexane, ethanol, ethylene, or propylene.

In some implementations, a concentration of the gas phase carbon source is 0.1 L/min-10 L/min, may specifically be 0.1 L/min, 1 L/min, 3 L/min, 5 L/min, 8 L/min, or 10 L/min, and is not limited herein.

In some implementations, a temperature-holding time of vapor deposition is 1h-48h, may specifically be 1h, 2h, 4h, 6h, 8h, 12h, 18h, 24h, or 48h, and is not limited herein.

In some implementations, the modified gas includes at least one of oxygen, water vapor, ammonia, hydrogen sulfide, phosphine, hydrogen chloride, hydrogen fluoride, hydrogen bromide, nitric oxide, sulfur dioxide, or chlorine.

In some implementations, a flow rate of the modified gas is 0.5 L/min-5 L/min, may specifically be 0.5 L/min, 1 L/min, 2 L/min, 3 L/min, 4 L/min, or 5 L/min, and is not limited herein.

In some implementations, an introduction time of the modified gas is 0.5h-10h, may specifically be 0.5h, 2h, 4h, 6h, 8h, or 10h, and is not limited herein.

In some implementations, the modified functional group is selected from at least one of carboxyl, carbonyl, hydroxyl, epoxy, a nitrogen-containing functional group, a sulfur-containing functional group, a halogen-containing functional group, or a derived functional group thereof.

In some implementations, the protective atmosphere includes at least one of helium, neon, argon, krypton, and xenon.

In some implementations, a volume ratio of the protective atmosphere to the gas phase carbon source is 10:(0.5-10), may specifically be 10:0.5, 10:1, 10:2, 10:3, 10:4, 10:5, 10:7, 10:8, 10:9, or 10: 10, and is not limited herein.

In some implementations, a volume ratio of the protective atmosphere to the modified gas is 10:(0.1-10), may specifically be 10:0.1, 10:1, 10:2, 10:3, 10:4, 10:5, 10:7, 10:8, 10:9, or 10:10, and is not limited herein.

In some implementations, S10 includes: in a protective atmosphere, a gas phase carbon source is deposited on the surface of the silicon-based active substance by means of vapor deposition, so as to obtain a compound; and the compound is dispersed in a first modified solution containing a first modifying agent, and solid-liquid separation, drying, and heat treatment are performed to obtain the first precursor.

The manner of preparing the compound is referred to the above, and is not described herein again.

In some implementations, the first modifying agent includes an anionic surfactant.

In some implementations, the first modifying agent includes at least one of hexadecyl trimethyl ammonium bromide, sodium hexadecyl sulfate, polyvinylpyrrolidone, or sodium polystyrene sulfonate.

In some implementations, a mass ratio of the compound in the first modified solution to the first modifying agent is 1:(0.05-1), may specifically be 1:0.05, 1:0.1, 1:0.2, 1:0.4, 1:0.5, 1:0.7, 1:0.8, 1:0.9, or 1:1, and is not limited herein.

In some implementations, the first modified solution includes a polar solvent.

In some implementations, the polar solvent includes at least one of water, anhydrous ethanol, methanol, and isopropanol.

In some implementations, a dispersion mode includes at least one of mechanical stirring and ultrasonic dispersion.

In some implementations, solid-liquid separation includes at least one of centrifugation, atmospheric filtration, and negative pressure filtration.

In some implementations, a drying temperature is 60 °C-200 °C, may specifically be 60 °C, 80°C, 100 °C, 120 °C, 150 °C, 180 °C, or 200 °C, and is not limited herein.

In some implementations, when the first modifying agent is used to form the connection layer having the modified functional group, the method further includes heating the dried product, where a heating temperature is 600 °C-900 °C, and a heating time is 1h-6h.

In some implementations, the heating temperature may specifically be 600 °C, 650 °C, 700 °C, 720 °C, 750 °C, 800 °C, 850°C, or 900 °C, and the heating time may specifically be 1h, 2h, 3h, 4h, 5h, or 6h, and is not limited herein. In some implementations, S10 includes: spray drying is performed on a mixed coating solution containing the silicon-based active substance and polymer, so as to cause the surface of the silicon-based active substance to form the connection layer, where the connection layer includes the polymer.

In some implementations, a solid content of the silicon-based active substance in the mixed coating solution is 5%-50%.

In some implementations, the mixed coating solution includes a polar solvent.

In some implementations, the polar solvent includes at least one of water, anhydrous ethanol, methanol, and isopropanol.

In some implementations, a mass ratio of the silicon-based active substance to the polymer is 10:(0.1-5), may specifically be 10:0.1, 10:1, 10:2, 10:3, 10:4, or 10:5, and is not limited herein.

In some implementations, a drying temperature of spray drying is 60 °C-200 °C, may specifically be 60 °C, 80 °C, 100 °C, 120 °C, 150 °C, 180 °C, or 200 °C, and is not limited herein.

In some implementations, the polymer includes at least one of diblock copolymer, triblock copolymer, and multiblock copolymer.

In some implementations, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid.

In some implementations, the polymer includes a modified functional group, and the modified functional group is selected from at least one of carboxyl, carbonyl, hydroxyl, epoxy, a nitrogen-containing functional group, a sulfur-containing functional group, a halogen-containing functional group, and a derived functional group thereof.

In some implementations, before S20, the method further includes: dispersing the buffer layer material in a second modified solution containing a second modifying agent for modification, and performing solid-liquid separation and drying to obtain the buffer layer material having the surface functional group.

In some implementations, the second modifying agent includes a cationic surfactant.

In some implementations, the second modifying agent includes at least one of poly(diallyldimethylammonium chloride), aminopropyltriethoxysilane, and a silane coupling agent.

In some implementations, a mass ratio of the buffer layer material in the second modified solution to the second modifying agent is 1:(0.5-10), and may specifically be 1:0.5, 1:0.1, 1:2, 1:3, 1:4, 1:5, 1:6, 1:8, or 1: 10, etc.

In some implementations, the second modified solution includes a polar solvent.

In some implementations, the polar solvent includes at least one of water, anhydrous ethanol, methanol, and isopropanol.

In some implementations, solid-liquid separation includes at least one of centrifugation, atmospheric filtration, and negative pressure filtration.

In some implementations, a drying temperature is 60 °C-200 °C, may specifically be 60 °C, 80 °C, 100 °C, 120 °C, 150 °C, 180 °C, or 200 °C, and is not limited herein.

In some implementations, a dispersion mode includes at least one of mechanical stirring and ultrasonic dispersion.

At S20, the polymerization reaction is performed on the mixed slurry containing the first precursor and the buffer layer material having the surface functional group, to cause the surface functional group of the buffer layer material to be connected to the modified functional group of the connection layer through the covalent bond, and drying is performed to obtain the second precursor.

It is to be noted that, the buffer layer material can be connected to the connection layer on the surface of the silicon-based active substance by means of self-assembly, electrostatic adsorption, spray granulation coating, etc.

In some implementations, in the mixed slurry, a mass ratio of the first precursor to the buffer layer material having the surface functional group is 1: (0.01-2), and may specifically be 1:0.01, 1:0.02, 1:0.05, 1:0.08, 1:0.1, 1:0.2, 1:0.5, 1:0.8, 1:1, 1:1.5, or 1:2, etc. Preferably, the mass ratio of the first precursor to the buffer layer material having the surface functional group is 1: (0.01-1).

In some implementations, a solid content of the first precursor in the mixed slurry is 2%-50%, may specifically be 2%, 5%, 8%, 10%, 15%, 20%, 30%, 40%, or 50%, etc., and is not limited herein.

In some implementations, a solid content of the buffer layer material having the surface functional group in the mixed slurry is 0.5%-25%, may specifically be 0.5%, 2%, 5%, 8%, 10%, 15%, 18%, 20%, or 25%, etc., and is not limited herein.

In some implementations, the buffer layer material includes the hollow carbon material, and the hollow carbon material includes at least one of a hollow carbon ball, a hollow carbon rod, and a hollow carbon tube.

In some implementations, a solid content in the mixed slurry is 5%-60%, may specifically be 5%, 2%, 6%, 10%, 20%, 30%, 40%, 50%, or 60%, etc., and is not limited herein.

In some implementations, a mass ratio of the first precursor in the mixed slurry to an active agent is 1:(0.1-0.5), and may specifically be 1:0.1, 1:0.2, 1:0.3, 1:0.4, or 1:0.5, etc.

In some implementations, the mixed slurry is further dispersed and centrifugated, and a dispersion mode includes at least one of mechanical stirring and ultrasonic dispersion.

In some implementations, the mixed slurry further includes the active agent, and the active agent is selected from at least one of poly(diallyldimethylammonium chloride), aminopropyltriethoxysilane, a silane coupling agent, hexadecyl trimethyl ammonium bromide, sodium hexadecyl sulfate, polyvinylpyrrolidone, and sodium polystyrene sulfonate.

In some implementations, the mixed slurry further includes a solvent, and the solvent is selected from at least one of water, anhydrous ethanol, methanol, and isopropanol.

In some implementations, a drying mode is spray drying. A temperature of spray drying is 100°C-200°C, may specifically be 100°C, 110°C, 120°C, 150°C, 170°C, 180°C, or 200 °C, and is not limited herein.

In some implementations, a feeding rate of spray drying is 100 mL/min-1000 mL/min, may specifically be 100 mL/min, 200 mL/min, 300 mL/min, 400 mL/min, 600 mL/min, 800 mL/min, or 1000 mL/min, etc., and is not limited herein.

At S30, the second precursor is coated to obtain the anode material.

In some implementations, coating treatment includes carbon coating treatment and/or polymer coating treatment.

In some implementations, the coating may be performed by means of vapor deposition, liquid phase coating, organic matter cracking, etc.

In some implementations, the step of performing carbon coating on the second precursor includes: introducing the gas phase carbon source in the second precursor, and performing heating until a thermal decomposition reaction occurs in the gas phase carbon source, so as to form the protective layer on a surface of the second precursor through deposition. The protective layer includes at least one of an amorphous carbon material and a graphitized carbon material.

In some implementations, the gas phase carbon source includes at least one of acetylene, methane, toluene, cyclohexane, ethanol, ethylene, and propylene.

In some implementations, a temperature rising rate of heating is 1 °C/min-20 °C/min, and may specifically be 1 °C/min, 2°C/min, 3 °C/min, 4°C/min, 5°C/min, 8°C/min, 10 °C/min, 12 °C/min, 15 °C/min, 18 °C/min, or 20 °C/min. Preferably, the temperature rising rate is 3 °C/min-5 °C/min. Through a plurality of experiments, the applicant found that, when the temperature rising rate is controlled between 3 °C/min and 5 °C/min, the undergoing of a carbonization reaction can be effectively guaranteed, and the time for heating to a preset temperature range can also be shortened.

In some implementations, a temperature of the thermal decomposition reaction is 600 °C-1000 °C. Specifically, a reaction temperature may be 600 °C, 650 °C, 700 °C, 750 °C, 800 °C, 890 °C, 900 °C, 960 °C, or 1000 °C. Through a plurality of experiments, the applicant found that, reaction efficiency may be improved by controlling the reaction temperature within 600 °C-1000 °C, such that a uniform carbon layer is formed on the surface of the second precursor, and the carbon layer may be amorphous carbon. Preferably, the reaction temperature is 700 °C-900 °C.

In some implementations, a temperature-holding time of the thermal decomposition reaction is 1h-48h, may specifically be 1h, 4h, 8h, 12h, 16h, 24h, 28h, 32h, 38h, or 48h, and is not limited herein.

In some implementations, the concentration of the gas phase carbon source is 0.1 L/min-10 L/min, may specifically be 0.1 L/min, 0.4 L/min, 0.6 L/min, 0.8 L/min, 1.0 L/min, 2 L/min, 5 L/min, 6 L/min, 8 L/min, 9 L/min, or 10 L/min, etc., and is not limited herein.

In some implementations, the thermal decomposition reaction is undergone under a protective atmosphere.

In some implementations, the protective atmosphere includes at least one of helium, neon, argon, krypton, and xenon.

In some implementations, a volume ratio of the protective atmosphere to the gas phase carbon source is 10:(0.5-10), may specifically be 10:0.5, 10:1, 10:2, 10:3, 10:5, 10:6.5, 10:7.5, 10:8.5, 10:9, or 10:10, etc., and is not limited herein.

In some implementations, the step of performing polymer coating on the second precursor includes: performing spray drying on a mixed coating solution containing the second precursor and the polymer, so as to cause the surface of the second precursor to form the protective layer, where the protective layer includes the polymer.

In some implementations, a solid content of the second precursor in the mixed coating solution is 5%-50%, may specifically be 5%, 10%, 15%, 20%, 25%, 30%, 35%, 40%, 45%, or 50%, etc., and is not limited herein.

In some implementations, the mixed coating solution includes a polar solvent.

In some implementations, the polar solvent includes at least one of water, anhydrous ethanol, methanol, and isopropanol.

In some implementations, a mass ratio of the second precursor to the polymer is 10:(0.1-5), may specifically be 10:0.1, 10:1, 10:2, 10:3, 10:4, or 10:5, and is not limited herein.

In some implementations, a drying temperature of spray drying is 60 °C-200 °C, and may specifically be 60 °C, 80 °C, 100°C, 120°C, 150°C, 180 °C, or 200 °C.

In some implementations, the polymer includes at least one of diblock copolymer, triblock copolymer, and multiblock copolymer.

In some implementations, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid.

An embodiment of the present disclosure further provides a secondary battery, including the anode material provided in the embodiments of the present disclosure or the anode material prepared by the method for preparing an anode material provided in the embodiments of the present disclosure. The secondary battery may be a lithium-ion battery, a sodium-ion battery, etc. The lithium-ion battery provided in the embodiment of the present disclosure has the advantages of being high in capacity, high in initial effect, long in cycle life, excellent in rate capability, and low in expansion.

The embodiments of the present disclosure are further described below with a plurality of embodiments. The embodiments of the present disclosure are not limited to the following specific embodiments. Changes may be implemented appropriately within the scope of unchanged primary rights.

### Embodiment 1

A method for preparing an anode material included the following steps.
(1) Silicon with a median particle diameter being 2 µm was put into a rotary atmosphere furnace, under the protection of an argon atmosphere, a temperature was heated to 900 °C with a temperature rising rate of 3 °C/min, a 0.5L/min acetylene gas was introduced to cause a volume ratio of argon in the rotary atmosphere furnace to acetylene to be 9: 1, the acetylene gas was turned off after the temperature was held for 3h, a 1.5L/min ammonia was introduced to cause a volume ratio of the argon in the rotary atmosphere furnace to the ammonia to be 10:1, the ammonia was turned off after the temperature was held for 3h, and the temperature was cooled to obtain a compound; and 10g of the compound and hexadecyl trimethyl ammonium bromide were dispersed in 200 mL of deionized water according to a mass ratio of 10:2, then stirring was performed for 30 minutes, then ultrasound was performed for 10 minutes, and a first precursor was obtained after centrifugation and drying.
(2) 1 g of hollow carbon balls with a diameter of 100 nm and 1 g of poly(diallyldimethylammonium chloride) were dissolved in 100 mL of the deionized water, then stirring was performed for 30 minutes, then ultrasound was performed for 20 minutes, and a surface-hydroxylated hollow carbon ball material was obtained after centrifugation and drying. 10 g of the first precursor was dissolved in 100 mL of the deionized water, then stirring was performed for 10 minutes to obtain a solution E, 1 g of modified hollow carbon balls was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon ball; the protective layer was a polymer layer (polyacrylic acid); the buffer layer was filled between the connection layer and the protective layer; and the amorphous carbon material layer was connected to the hollow carbon ball of the buffer layer through a covalent bond (carbon-nitrogen bond).

A median particle diameter of the anode material was 2.5 µm, a specific surface area was 5 m²/g, a powder tap density was 0.9 g/cm³, a powder compaction density was 1.65 g/cm³, a mass content of oxygen in the anode material was 5%, a mass content of carbon in the anode material was 25%, a thickness of the connection layer was 50 nm, a thickness of the buffer layer was 500 nm, a thickness of the protective layer was 30 nm, and a mass content of the protective layer in the anode material was 5%.

Fig. 4 was a scanning electron microscope picture of the anode material in this embodiment. A surface of the anode material has a spherical carbon structure and was coated with a compact carbon layer.

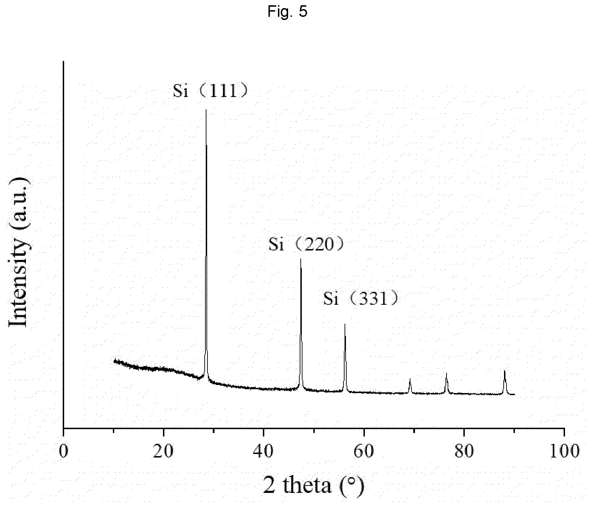

Fig. 5 was an XRD diagram of the anode material in this embodiment. As shown in Fig. 5, from the XRD diagram of the anode material, it might be seen that three strong peaks at 28.4°, 47.3°, and 56.1° corresponded to three strong peaks of silicon (JCPDS No.27-1402), which was basically free of impure phases.

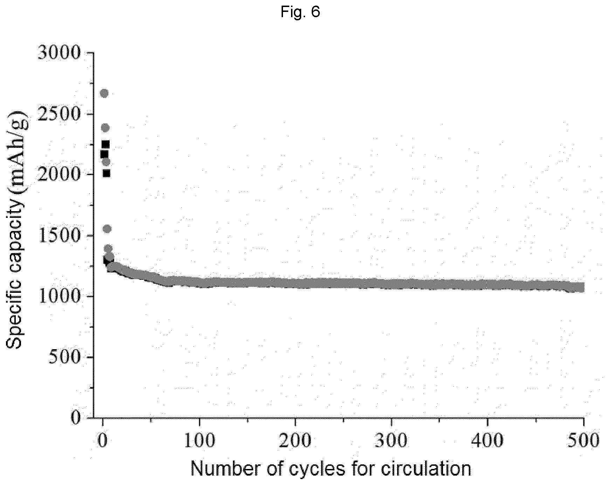

Fig. 6 was a curve of the cycling performance of the anode material in this embodiment. As shown in Fig. 6, the material had excellent cycling performance, a charging-discharging current was 1000 mA/g, there was still a 1068mAh/g capacity after 500 cycles were circulated under a 0.25C current, and a capacity retention rate reached 81%.

### Embodiment 2

A method for preparing an anode material included the following steps.
(1) Silicon with a median particle diameter being 2.5 µm was put into a rotary atmosphere furnace, under the protection of an argon atmosphere, a temperature was heated to 950 °C with a temperature rising rate of 3 °C/min, a 0.5L/min acetylene gas was introduced to cause a volume ratio of argon in the rotary atmosphere furnace to acetylene to be 9: 1, the acetylene gas was turned off after the temperature was held for 4h, a 1.5L/min hydrogen sulfide was introduced to cause a volume ratio of the argon in the rotary atmosphere furnace to the hydrogen sulfide to be 5:1, the temperature was held for 3h, and then the temperature was cooled to obtain a compound; and 10g of the compound and hexadecyl trimethyl ammonium bromide were dispersed in 200 mL of deionized water according to a mass ratio of 10:1, then stirring was performed for 30 minutes, then ultrasound was performed for 10 minutes, and a second precursor was obtained after centrifugation and drying.
(2) 1 g of hollow carbon balls with a diameter of 200 nm and 2g of poly(diallyldimethylammonium chloride) were dissolved in 100 mL of the deionized water, then stirring was performed for 30 minutes, then ultrasound was performed for 20 minutes, and a surface-carboxylated hollow carbon ball material was obtained after centrifugation and drying. 10 g of the first precursor was dissolved in 100 mL of the deionized water, then stirring was performed for 10 minutes to obtain a solution E, 2g of modified hollow carbon balls was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of the deionized water, 1 g of polyacrylonitrile was added, then mechanical stirring was performed for 30 minutes, and by means of spray drying, a drying temperature was controlled at 120°C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon ball; the protective layer was a polymer layer (polyacrylonitrile); the buffer layer was filled between the connection layer and the protective layer; and the amorphous carbon material layer was connected to the hollow carbon ball of the buffer layer through a covalent bond (carbon-sulfur bond).

Through testing, a median particle diameter of the silicon carbon anode material was 2.8 µm, a specific surface area was 2m²/g, a powder tap density was 1.0g/cm³, a powder compaction density was 1.5g/cm³, a mass content of oxygen in the anode material was 4%, a mass content of carbon in the anode material was 30%, a thickness of the connection layer was 60 nm, a thickness of the buffer layer was 800 nm, a thickness of the protective layer was 20 nm, and a mass content of the protective layer in the anode material was 8%.

### Embodiment 3

(1) Silicon with a median particle diameter being 2.5 µm was put into a rotary atmosphere furnace, under the protection of an argon atmosphere, a temperature was heated to 950 °C with a temperature rising rate of 3 °C /min, a 0.5L/min acetylene gas was introduced to cause a volume ratio of argon in the rotary atmosphere furnace to acetylene to be 9: 1, the acetylene gas was turned off after the temperature was held for 4h, a 2.5L/min hydrogen chloride was introduced to cause a volume ratio of the argon in the rotary atmosphere furnace to the hydrogen chloride to be 8: 1, the temperature was held for 4h, and then the temperature was cooled to obtain a compound; and 10g of the compound and polyvinylpyrrolidone were dispersed in 200 mL of anhydrous ethanol according to a mass ratio of 10:3, then stirring was performed for 30 minutes, then ultrasound was performed for 10 minutes, and a first precursor was obtained after centrifugation and drying.
(2) 1 g of 1000nm hollow carbon tubes with a diameter of 50 nm and 2g of aminopropyltriethoxysilane were dissolved in 100 mL of the deionized water, then stirring was performed for 30 minutes, then ultrasound was performed for 20 minutes, and a hollow carbon tube material with amino on the surface was obtained after centrifugation and drying. 10 g of the first precursor was dissolved in 100 mL of the deionized water, then stirring was performed for 10 minutes to obtain a solution E, 2g of modified hollow carbon tubes was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of anhydrous ethanol, 3g of tannic acid was added, then mechanical stirring was performed for 30 minutes, and by means of spray drying, a drying temperature was controlled at 120 °C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon tube; the protective layer was a polymer layer (tannic acid); the buffer layer was filled between the connection layer and the protective layer; and the amorphous carbon material layer was connected to the hollow carbon ball of the buffer layer through a covalent bond (carbon-chlorine bond).

The anode material prepared in this embodiment had a core-shell structure; a core included silicon; a housing included a connection layer and a protective layer; the connection layer was an amorphous carbon material layer; and the protective layer included polytannic acid and a hollow carbon tube dispersed in the polytannic acid.

Through testing, a median particle diameter of the anode material was 4.5 µm, a specific surface area was 8m²/g, a powder tap density was 1.1g/cm³, a powder compaction density was 1.7g/cm³, a mass content of oxygen in the anode material was 7%, a mass content of carbon in the anode material was 35%, a thickness of the connection layer was 60 nm, a thickness of the buffer layer was 700 nm, a thickness of the protective layer was 45 nm, and a mass content of the protective layer in the anode material was 15%.

### Embodiment 4

(1) Silicon with a median particle diameter being 2 µm was put into a rotary atmosphere furnace, under the protection of an argon atmosphere, a temperature was heated to 900 °C with a temperature rising rate of 3 °C/min, a 0.5L/min acetylene gas was introduced to cause a volume ratio of argon in the rotary atmosphere furnace to acetylene to be 9: 1, the acetylene gas was turned off after the temperature was held for 3h, a 1.5L/min ammonia was introduced to cause a volume ratio of the argon in the rotary atmosphere furnace to the ammonia to be 4:1, the ammonia was turned off after the temperature was held for 3h, and a first precursor was obtained after cooling.
(2) 10 g of the first precursor and 0.5 g of the hollow carbon tube (with a diameter being 50 nm and a length being 1000 nm) were dissolved in 200 mL of anhydrous ethanol, 2 g of polyvinylpyrrolidone was added, then stirring was performed for 30 minutes, then ultrasound was performed for 10 minutes, so as to obtain a mixed slurry, and spherization was performed on the mixed slurry by means of spray granulation under a drying condition of 130 °C, so as to obtain a second precursor.
(3) 10 g of the second precursor was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon tube; the protective layer was a polymer layer (polyacrylic acid); the buffer layer was filled between the connection layer and the protective layer; and the amorphous carbon material layer was connected to the hollow carbon ball of the buffer layer through a covalent bond (carbon-nitrogen bond).

The anode material prepared in this embodiment had a core-shell structure; a core included silicon; a housing included a connection layer and a protective layer; the connection layer was an amorphous carbon material layer; and the protective layer included polyacrylic acid and a hollow carbon tube dispersed in the polyacrylic acid.

A median particle diameter of the anode material was 3.5 µm, a specific surface area was 15m²/g, a powder tap density was 0.88g/cm³, a powder compaction density was 1.36g/cm³, a mass content of oxygen in the anode material was 11%, a mass content of carbon in the anode material was 21%, a thickness of the connection layer was 50 nm, a thickness of the buffer layer was 300 nm, a thickness of the protective layer was 33 nm, and a mass content of the protective layer in the anode material was 5%.

### Embodiment 5

(1) Silicon with a median particle diameter being 3 µm was put into a rotary atmosphere furnace, under the protection of an argon atmosphere, a temperature was heated to 800 °C with a temperature rising rate of 5 °C/min, a 0.5L/min acetylene gas was introduced to cause a volume ratio of argon in the rotary atmosphere furnace to acetylene to be 9: 1, the acetylene gas was turned off after the temperature was held for 3h, a 2.5L/min ammonia was introduced to cause a volume ratio of the argon in the rotary atmosphere furnace to the ammonia to be 6: 1, the ammonia was turned off after the temperature was held for 3h, and a first precursor was obtained after cooling.
(2) 10 g of the first precursor and 0.5 g of the hollow carbon tube (with a diameter being 80 nm and a length being 1100 nm) were dissolved in 200 mL of anhydrous ethanol, 2 g of polyvinylpyrrolidone was added, then stirring was performed for 30 minutes, then ultrasound was performed for 10 minutes, so as to obtain a mixed slurry, and spherization was performed on the mixed slurry by means of spray granulation under a drying condition of 130 °C, so as to obtain a second precursor.
(3) 10 g of the second precursor was taken and dissolved in 100 g of anhydrous ethanol, 1 g of polyacrylonitrile was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon tube; the protective layer was a polymer layer (polyacrylonitrile); the buffer layer was filled between the connection layer and the protective layer; and the amorphous carbon material layer was connected to the hollow carbon ball of the buffer layer through a covalent bond (carbon-nitrogen bond).

The anode material prepared in this embodiment had a core-shell structure; a core included silicon; a housing included a connection layer and a protective layer; the connection layer was an amorphous carbon material layer; and the protective layer included polyacrylonitrile and a hollow carbon tube dispersed in the polyacrylonitrile.

Through testing, a median particle diameter of the silicon carbon anode material was 5 µm, a specific surface area was 19m²/g, a powder tap density was 0.98g/cm³, a powder compaction density was 1.4g/cm³, a mass content of oxygen in the anode material was 23%, a mass content of carbon in the anode material was 29%, a thickness of the connection layer was 66 nm, a thickness of the buffer layer was 200 nm, a thickness of the protective layer was 25 nm, and a mass content of the protective layer in the anode material was 5%.

### Embodiment 6

(1) Silicon with a median particle diameter being 6 µm was put into a rotary atmosphere furnace, under the protection of an argon atmosphere, a temperature was heated to 900 °C with a temperature rising rate of 3 °C/min, a 0.5L/min acetylene gas was introduced to cause a volume ratio of argon in the rotary atmosphere furnace to acetylene to be 9: 1, the acetylene gas was turned off after the temperature was held for 3h, a 3.5L/min hydrogen fluoride was introduced to cause a volume ratio of the argon in the rotary atmosphere furnace to the hydrogen fluoride to be 2:1, the hydrogen fluoride was turned off after the temperature was held for 8h, and a first precursor was obtained after cooling.
(2) 10 g of the first precursor and 0.5 g of the hydroxylated hollow carbon tube (with a diameter being 50 nm and a length being 1000 nm) were dissolved in 200 mL of anhydrous ethanol, 2 g of polyvinylpyrrolidone was added, then stirring was performed for 30 minutes, then ultrasound was performed for 10 minutes, so as to obtain a mixed slurry, and spherization was performed on the mixed slurry by means of spray granulation under a drying condition of 130°C, so as to obtain a second precursor.
(3) 100 g of the second precursor was put into the rotary atmosphere furnace, under the protection of the argon atmosphere, the temperature was heated to 900 °C with the temperature rising rate of 3°C/min, a 0.5L/min methane gas was introduced to cause a volume ratio of argon in the rotary atmosphere furnace to acetylene to be 9: 1, the acetylene gas was turned off after the temperature was held for 6h, and an anode material was obtained after cooling.

The anode material prepared in this embodiment had a core-shell structure; a core included silicon; a housing included a connection layer and a protective layer; the connection layer was an amorphous carbon material layer; the connection layer was coated on a surface of a silicon particle; the protective layer included an amorphous carbon material and a hollow carbon tube dispersed in the amorphous carbon material; and the amorphous carbon material layer was connected to the hollow carbon tube through a covalent bond (fluorocarbon bond).

A median particle diameter of the anode material was 8 µm, a specific surface area was 11m²/g, a powder tap density was 0.98g/cm³, a powder compaction density was 1.3g/cm³, a mass content of oxygen in the anode material was 8%, a mass content of carbon in the anode material was 32%, a thickness of the connection layer was 50 nm, a thickness of the protective layer was 350 nm, and a mass content of the protective layer in the anode material was 14%.

### Embodiment 7

Preparation steps were the same as that in Embodiment 1. A difference between this embodiment and Embodiment 1 only lied in that, step (1) did not use the ammonia for modification, and a specific operation of step (1) in this embodiment included the following.

Silicon with a median particle diameter being 6 µm was put into a rotary atmosphere furnace, under the protection of an argon atmosphere, a temperature was heated to 900 °C with a temperature rising rate of 3 °C/min, a 0.5L/min acetylene gas was introduced to cause a volume ratio of argon in the rotary atmosphere furnace to acetylene to be 9: 1, the acetylene gas was turned off after the temperature was held for 3h, and the temperature was cooled to obtain a compound; and 10g of the compound and hexadecyl trimethyl ammonium bromide were dispersed in 200 mL of deionized water according to a mass ratio of 10:2, then stirring was performed for 30 minutes, then ultrasound was performed for 10 minutes, a product obtained after centrifugation and drying was placed in a vacuum reactor, and the vacuum reactor was heated to 700°C and then held at the temperature for 3h, so as to obtain a first precursor of which surface was subjected to amination modification.

The anode material prepared in this embodiment had a core-shell structure; a core included a silicon-based active substance; a housing included a connection layer, a buffer layer, and a protective layer; the connection layer was an amorphous carbon material layer; the amorphous carbon material layer was coated on a surface of a silicon particle; the buffer layer included a hollow carbon ball; the protective layer was a polymer layer (polyacrylic acid); the buffer layer was filled between the connection layer and the protective layer; and the amorphous carbon material layer was connected to the hollow carbon ball of the buffer layer through a covalent bond (carbon-nitrogen bond).

A median particle diameter of the anode material was 2.2 µm, a specific surface area was 4.8m²/g, a powder tap density was 0.92g/cm³, a powder compaction density was 1.59g/cm³, a mass content of oxygen in the anode material was 7%, a mass content of carbon in the anode material was 23%, a thickness of the connection layer was 60 nm, a thickness of the buffer layer was 550 nm, a thickness of the protective layer was 50 nm, and a mass content of the protective layer in the anode material was 5.2%.

### Embodiment 8

Preparation steps were the same as that in Embodiment. A difference between this embodiment and Embodiment 1 only lied in that, SiO was used as a silicon-based active substance.

The anode material prepared in this embodiment had a core-shell structure; a core included SiO; a housing included a connection layer, a buffer layer, and a protective layer; the connection layer was an amorphous carbon material layer; the amorphous carbon material layer was coated on a surface of a silicon particle; the buffer layer included a hollow carbon tube; the protective layer was a polymer layer (polyacrylonitrile); the buffer layer was filled between the connection layer and the protective layer; and the amorphous carbon material layer was connected to the hollow carbon ball of the buffer layer through a covalent bond (carbon-nitrogen bond).

A median particle diameter of the anode material was 2.6 µm, a specific surface area was 5.3m²/g, a powder tap density was 0.97g/cm³, a powder compaction density was 1.64g/cm³, a mass content of oxygen in the anode material was 19%, a mass content of carbon in the anode material was 22%, a thickness of the connection layer was 54 nm, a thickness of the buffer layer was 500 nm, a thickness of the protective layer was 40 nm, and a mass content of the protective layer in the anode material was 8%.

### Embodiment 9

Preparation steps were the same as that in Embodiment. A difference between this embodiment and Embodiment 1 only lied in that, lithium silicon alloy was used as a silicon-based active substance.

The anode material prepared in this embodiment had a core-shell structure; a core included the lithium silicon alloy; a housing included a connection layer, a buffer layer, and a protective layer; the connection layer was an amorphous carbon material layer; the amorphous carbon material layer was coated on a surface of a silicon particle; the buffer layer included a hollow carbon ball; the protective layer was a polymer layer (polyacrylic acid); the buffer layer was filled between the connection layer and the protective layer; and the amorphous carbon material layer was connected to the hollow carbon ball of the buffer layer through a covalent bond (carbon-nitrogen bond).

A median particle diameter of the anode material was 3.1 µm, a specific surface area was 6.1m²/g, a powder tap density was 1.01 g/cm³, a powder compaction density was 1.72g/cm³, a mass content of oxygen in the anode material was 12%, a mass content of carbon in the anode material was 28%, a thickness of the connection layer was 50 nm, a thickness of the buffer layer was 600 nm, a thickness of the protective layer was 60 nm, and a mass content of the protective layer in the anode material was 8.5%.

### Embodiment 10

(1) Silicon with a median particle diameter being 6 µm was put into a 1mol/L nickel acetate solution, ultrasound was performed for 30 minutes to obtain dispersion liquid, and a slurry was dried by means of spray drying, so as to obtain a silicon precursor with a nickel acetate modified surface. The precursor was put into a rotary atmosphere furnace, under the protection of an argon atmosphere, a temperature was heated to 900 °C with a temperature rising rate of 3 °C/min, a 0.5L/min toluene vapor was introduced, a 1.5L/min ammonia was introduced to cause a volume ratio of argon in the rotary atmosphere furnace to toluene to be 9:1, the ammonia was turned off after the temperature was held for 3h, and the temperature was cooled to obtain a compound; and 10g of the compound and hexadecyl trimethyl ammonium bromide were dispersed in 200 mL of deionized water according to a mass ratio of 10:2, then stirring was performed for 30 minutes, then ultrasound was performed for 10 minutes, and a first precursor was obtained after centrifugation and drying.
(2) 1 g of hollow carbon balls with a diameter of 100 nm and 1 g of poly(diallyldimethylammonium chloride) were dissolved in 100 mL of the deionized water, then stirring was performed for 30 minutes, then ultrasound was performed for 20 minutes, and a hollow carbon ball material with hydroxyl on the surface was obtained after centrifugation and drying. 10 g of the first precursor was dissolved in 100 mL of the deionized water, then stirring was performed for 10 minutes to obtain a solution E, 1g of modified hollow carbon balls was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was a graphitized carbon material layer; a graphitized carbon material included graphene; the graphitized carbon material layer was coated on a surface of a silicon particle; the buffer layer included a hollow carbon ball; the protective layer was a polymer layer (polyacrylic acid); the buffer layer was filled between the connection layer and the protective layer; and the graphitized carbon material layer was connected to the hollow carbon ball of the buffer layer through a covalent bond (carbon-nitrogen bond).

A median particle diameter of the anode material was 2.4 µm, a specific surface area was 5.6m²/g, a powder tap density was 0.88g/cm³, a powder compaction density was 1.63g/cm³, a mass content of oxygen in the anode material was 4.6%, a mass content of carbon in the anode material was 22%, a thickness of the connection layer was 5 nm, a thickness of the buffer layer was 500 nm, a thickness of the protective layer was 30 nm, and a mass content of the protective layer in the anode material was 5%.

### Embodiment 11

(1) Silicon with a median particle diameter being 6 µm was put into a 0.1mol/L triblock copolymer P123 (polyethylene oxide-polypropylene oxide-polyethylene oxide) solution, a mass ratio of the silicon to the polymer P123 was 10:1, ultrasound was performed for 60 minutes to obtain a mixed coating solution, a solid content in the mixed coating solution is 40%, a slurry was dried by means of spray drying at 100°C, so as to obtain a first precursor, the first precursor included the silicon and a polymer connection layer coated on a surface of the silicon, and the polyethylene oxide-polypropylene oxide-polyethylene oxide used in this step carried phenol hydroxyl, carboxyl, and carbonyl modified functional groups itself.
(2) 1 g of hollow carbon balls with a diameter of 100 nm and 1 g of poly(diallyldimethylammonium chloride) were dissolved in 100 mL of the deionized water, then stirring was performed for 30 minutes, then ultrasound was performed for 20 minutes, and a hollow carbon ball material after surface hydroxylation modification was obtained after centrifugation and drying. 10 g of the first precursor was dissolved in 100 mL of the deionized water, then stirring was performed for 10 minutes to obtain a solution E, 1g of modified hollow carbon balls was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was a polymer layer; the polymer layer was coated on a surface of a silicon particle; the buffer layer included a hollow carbon ball; the protective layer was a polymer layer (polyacrylic acid); the buffer layer was filled between the connection layer and the protective layer; and the polymer layer was connected to the hollow carbon ball of the buffer layer through a covalent bond (carbon-oxygen bond).

The anode material prepared in this embodiment had the core-shell structure; the core included the silicon; the housing included the connection layer and the protective layer; the connection layer was the polymer layer; and the protective layer included the polyacrylic acid and the hollow carbon ball dispersed in the polyacrylic acid.

A median particle diameter of the anode material was 2.6 µm, a specific surface area was 5.7m²/g, a powder tap density was 0.89g/cm³, a powder compaction density was 1.61g/cm³, a mass content of oxygen in the anode material was 4.9%, a mass content of carbon in the anode material was 27%, a thickness of the connection layer was 20 nm, a thickness of the buffer layer was 500 nm, a thickness of the protective layer was 30 nm, and a mass content of the protective layer in the anode material was 5%.

### Comparative embodiment 1

(1) 10 g of a silicon material with a median particle diameter being 2 µm and hexadecyl trimethyl ammonium bromide were dispersed in 200 mL of deionized water according to a mass ratio of 10:2, then stirring was performed for 30 minutes, then ultrasound was performed for 10 minutes, and a modified silicon material was obtained after centrifugation and drying. 1 g of hollow carbon balls with a diameter of 100 nm and 1 g of poly(diallyldimethylammonium chloride) were dissolved in 100 mL of the deionized water, then stirring was performed for 30 minutes, then ultrasound was performed for 20 minutes, and a modified hollow carbon ball material was obtained after centrifugation and drying. 10 g of the modified silicon material was dissolved in 100 mL of the deionized water, then stirring was performed for 10 minutes to obtain a solution E1, 1 g of modified hollow carbon balls was dispersed in 100 mL of the deionized water, and then stirring was performed for 10 minutes to obtain a solution F1. The solution E1 was slowly added dropwise to the solution F, continuous rapid stirring was performed for 40 minutes, and then a compound product H1 was obtained after centrifugation and drying.
(2) 10 g of the compound product H1 was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this comparative embodiment included a silicon simple substance and a buffer layer and a protective layer coated on a surface of the silicon simple substance; the buffer layer was a hollow carbon ball; the protective layer was polypropylene; and there was no connection layer on the surface of the silicon simple substance.

Through testing, a median particle diameter of the anode material was 2.2 µm, a specific surface area was 8.5m²/g, a powder tap density was 0.8g/cm³, a powder compaction density was 1.1g/cm³, a mass content of oxygen in the anode material was 25%, a mass content of carbon in the anode material was 15%, a thickness of the buffer layer was 500 nm, and a mass content of the protective layer in the anode material was 3%.

### Comparative embodiment 2

(1) Silicon with a median particle diameter being 2 µm was put into a rotary atmosphere furnace, under the protection of an argon atmosphere, a temperature was heated to 900 °C with a temperature rising rate of 3 °C/min, a 0.5L/min acetylene gas was introduced to cause a volume ratio of argon in the rotary atmosphere furnace to acetylene to be 9: 1, and the acetylene gas was turned off after the temperature was held for 3h, so as to obtain a first precursor.
(2) 10 g of the first precursor was dissolved in 100 mL of the deionized water, then stirring was performed for 10 minutes to obtain a solution E, 1 g of hollow carbon balls was dispersed in 100 mL of the deionized water, and then stirring was performed for 10 minutes to obtain a solution F. The solution E was slowly added dropwise to the solution F, continuous rapid stirring was performed for 40 minutes, and then a second precursor was obtained after centrifugation and drying.
(3) 10 g of the second precursor was taken and dissolved in 100 g of anhydrous ethanol, 1 g of polyacrylic acid was added, then mechanical stirring was performed for 30 minutes, and by means of spray drying, a drying temperature was controlled at 100 °C, so as to obtain an anode material.

The anode material prepared in this embodiment had a core-shell structure; a core included silicon; a housing included a connection layer, a buffer layer, and a protective layer; the connection layer was an amorphous carbon material layer; the amorphous carbon material layer was coated on a surface of a silicon particle; the buffer layer included a hollow carbon ball; the protective layer was a polymer layer (polyacrylic acid); and the buffer layer was filled between the connection layer and the protective layer.

A median particle diameter of the anode material was 2.9 µm, a specific surface area was 9m²/g, a powder tap density was 0.8g/cm³, a powder compaction density was 1.5g/cm³, a mass content of oxygen in the anode material was 12%, a mass content of carbon in the anode material was 20%, a thickness of the connection layer was 10 nm, a thickness of the buffer layer was 400 nm, a thickness of the protective layer was 40 nm, and a mass content of the protective layer in the anode material was 22%.

Test method:
1) Median particle diameter of anode material:
A method for testing a median particle diameter referred to GB/T 19077-2016. A laser particle size analyzer might be used for convenient determination, such as a Mastersizer 3000 laser particle size analyzer from Malvern Instruments Co., Ltd., UK.
2) Method for testing specific surface area of anode material:
At constant temperature and low temperature, adsorption capacities of gases with different relative pressures on a surface of a solid were determined, and then an adsorption capacity of a single molecule layer of a sample was solved based on a Brunauer-Emmett-Teller adsorption theory and a formula (BET formula) thereof, so as to calculate the specific surface area of the material.
3) Method for testing tap density:
Using Better Tap, a certain amount of a sample was weighed, and vibration was performed for 3000 times to test a tap density under 300 times/min.
4) Method for testing oxygen content and carbon content:
A Fourier infrared spectrometer was used to measure an oxygen content, and a thermogravimetric analysis method was used to test a carbon content.
5) Method for testing size of hollow carbon material:
An Atomic Force Microscope (AFM) and a High Resolution Transmission Electron Microscopy (HRTEM) were used to measure the size of the hollow carbon material.
6) Method for testing thicknesses of connection layer and protective layer:
Section treatment was performed on the material by using an FIB-SEM device, and measurement was performed in an SEM to obtain an average thickness of the connection layer and the protective layer.
7) Method for testing bonding strength between hollow carbon material and connection layer:
A maximum pulling force (F) required to detach a single hollow carbon material from the connection layer was measured by using a nano mechanical testing system and a probe testing system, in this embodiment and comparative embodiment, bonding strengths of 5 positions were tested, and an average value was calculated.
Through the above tests, the anode material prepared in Embodiments 1-11 and Comparative embodiments 1-2 had sample numbers corresponding to S1-S11 and R1-R2; and performance parameters of the anode material were described as Table 1.

**Table 1: Performance parameters of anode material**

| Perform ance paramet er | S1 | S2 | S3 | S4 | S5 | S6 | S7 | S8 | S9 | S10 | S11 | R1 | R2 |
|---|---|---|---|---|---|---|---|---|---|---|---|---|---|
| Median particle diameter (D50, µm) | 2.5 | 2.8 | 4.5 | 3.5 | 5 | 8 | 2.2 | 2.6 | 3.1 | 2.4 | 2.6 | 2.2 | 2.9 |
| Specific surface area (m²/g) | 5 | 2 | 8 | 15 | 19 | 11 | 4.8 | 5.3 | 6.1 | 5.6 | 5.7 | 8.5 | 9 |
| Tap density (g/cm³) | 0.9 | 1.0 | 1.1 | 0.88 | 0.98 | 0.98 | 0.92 | 0.97 | 1.01 | 0.88 | 0.89 | 0.8 | 0.8 |
| Compact ion density (g/cm³) | 1.65 | 1.5 | 1.7 | 1.36 | 1.4 | 1.3 | 1.59 | 1.64 | 1.72 | 1.63 | 1.61 | 1.2 | 1.5 |
| Oxygen content (%) | 5 | 4 | 7 | 11 | 23 | 8 | 7 | 19 | 12 | 4.6 | 4.9 | 25 | 12 |
| Carbon content (%) | 25 | 30 | 35 | 21 | 29 | 32 | 23 | 22 | 28 | 22 | 27 | 15 | 20 |
| Thicknes s of connecti on layer (nm) | 50 | 60 | 60 | 50 | 66 | 50 | 60 | 54 | 50 | 5 | 20 | 0 | 10 |
| Thicknes s of buffer layer (nm) | 500 | 800 | 700 | 300 | 200 | / | 550 | 500 | 600 | 500 | 500 | 500 | 400 |
| Thicknes s of protecti ve layer (nm) | 30 | 20 | 45 | 33 | 25 | 350 | 50 | 40 | 60 | 30 | 30 | 23 | 40 |
| Binding force (µN) between hollow carbon material and connecti on layer | 17.1 | 8.6 | 11.8 | 9.9 | 12 | 10 | 15.6 | 15 | 16.4 | 15.8 | 14.2 | / | 1.3 |

9) Electrochemical testing:
The anode material was mixed with sodium carboxymethyl cellulose, styrene-butadiene rubber, conductive graphite (KS-6), and carbon black (SP) respectively in a ratio of 92:2:2:2:2, so as to prepare slurry, the mixture was uniformly coated on copper foil and dried to prepare into an anode plate; a button battery was assembled in an argon atmosphere glove box; a diaphragm used was a polypropylene microporous membrane; an electrolyte solution used was 1 mol/L of lithium hexafluorophosphate (a solvent being a mixed slurry of ethylene carbonate, methyl ethyl carbonate, and dimethyl carbonate in a volume ratio of 1:1:1); and a counter electrode used was a metallic lithium sheet.

A discharge specific capacity test was performed on 13 groups of batteries on a blue lightning CT2001A battery testing system, the battery was discharged from an open circuit voltage to a voltage of 0.01 V at 0.01C, and a specific capacity was a discharge specific capacity.

A first coulombic efficiency test was performed on the 13 groups of batteries on the blue lightning CT2001A battery testing system; and a charging and discharging current was 0.05C, and first coulombic efficiency was measured.

A 100 cycle circulation test was performed on the 13 groups of batteries on the blue lightning CT2001A battery testing system; and the charging and discharging current was 0.2C, and post-cycle battery capacity and post-cycle capacity retention were tested and calculated after 100 cycles of circulation.

Capacity retention at 0.2C after 100 cycles of circulation = discharging capacity of the 100th cycle of circulation/discharging capacity of the third cycle *100%.

Expansion rate of electrode film at 0.2C after 100 cycles of circulation = (thickness of electrode film after the 100th cycle of circulation - initial thickness of electrode film)/initial thickness of electrode film*100%, and results were shown in Table 2.

**Table 2 Parameter performance comparison table of various batteries**

| Sample | Discharge specific capacity (mAh/g) | First coulombic efficiency (%) | Capacity at 0.2C after 100 cycles of circulation (mAh/g) | Capacity retention at 0.2C after 100 cycles of circulation (%) | Expansion rate of electrode film (%) |
|---|---|---|---|---|---|
| S1 | 2890 | 89.1 | 1068 | 81 | 23.4 |
| S2 | 2700 | 86.6 | 990 | 75.4 | 24.7 |
| S3 | 2450 | 84.7 | 1005 | 72.5 | 26.6 |
| S4 | 2130 | 83.1 | 974 | 78.6 | 24.5 |
| S5 | 2340 | 83.4 | 955 | 80.1 | 33.6 |
| S6 | 2258 | 82 | 943 | 79.5 | 32 |
| S7 | 2144 | 79 | 780 | 68 | 31 |
| S8 | 1570 | 77 | 890 | 80 | 23 |
| S9 | 1522 | 79 | 650 | 78 | 23 |
| S10 | 2478 | 85 | 923 | 77 | 26 |
| S11 | 2356 | 86 | 977 | 79 | 27 |
| R1 | 1560 | 79.5 | 708 | 61.5 | 35.1 |
| R2 | 2107 | 76 | 760 | 66 | 45 |

The anode material of the present disclosure had the advantages of being low in expansion and excellent in cyclic stability.

As shown in Table 2, according to the anode material prepared in Embodiments 1 to 11, by means of forming the connection layer having the modified functional group on the surface of the silicon-based active substance, and then performing the polymerization reaction on the hollow carbon material having the surface functional group and the first precursor so as to connect the connection layer and the hollow carbon material through the covalent bond, a bonding strength between the hollow carbon material and the connection layer might be greatly enhanced, the connection layer and the hollow carbon material were effectively tightly connected, and an excellent electrical contact could be guaranteed after volumetric expansion. The formed protective layer further improves the conductivity and structural integrity of the anode material, such that the occurrence of side reactions due to contact with electrolyte might be effectively inhibited, excellent mechanical properties of the anode material were maintained, and the structural stability of the anode material was improved, thereby improving cyclic stability.

During the preparation of the anode material in Comparative embodiment 1, the connection layer was not formed on the surface of the silicon simple substance, and the hollow carbon ball was attached to the surface of the silicon simple substance particle, resulting in a reduction in the stability of the connection layer; in a cyclic process, an expansion stress of the silicon particle caused the hollow carbon ball to be disconnected with the silicon, such that an electrical contact reduced, the capacity retention of the material reduced, and the expansion rate greatly increased.

During the preparation of the anode material in Comparative embodiment 2, the connection layer was not modified, the hollow carbon material and the connection layer could not be connected through the covalent bond, and were connected through an intermolecular force, resulting in a reduction in the stability of the connection layer; in a cyclic process, an expansion stress of the silicon particle easily caused the hollow carbon ball to be disconnected with the silicon, such that an electrical contact was reduced, the capacity retention of the material was reduced, and the expansion rate was greatly increased.

Although the present disclosure is disclosed as above with preferred embodiments, it is not intended to limit the claims, and any person skilled in the art may make a number of possible changes and modifications without departing from the conception of the present disclosure, and therefore the scope of protection of the present disclosure should be based on the scope defined in the claims of the present disclosure.

## Claims

1. An anode material, having a core-shell structure, wherein a core comprises a silicon-based active substance; a housing comprises a connection layer, a buffer layer, and a protective layer; the connection layer is coated on a surface of the silicon-based active substance; the buffer layer is filled between the connection layer and the protective layer; and the connection layer is connected to the buffer layer through a covalent bond.

2. The anode material according to claim 1, wherein the covalent bond comprises at least one of a carbon-carbon bond, a carbon-oxygen bond, a carbon-nitrogen bond, a carbon-sulfur bond, a carbon-chlorine bond, a fluorine-carbon bond, a nitrogen-oxygen bond, an oxygen-sulfur bond, an oxygen-chlorine bond, and a nitrogen-sulfur bond.

3. An anode material, having a core-shell structure, wherein a core comprises a silicon-based active substance; a housing comprises a connection layer, a buffer layer, and a protective layer; the connection layer is coated on a surface of the silicon-based active substance; the buffer layer is filled between the connection layer and the protective layer; and an average binding force F between the connection layer and the buffer layer is greater than 8 µN.

4. The anode material according to claim 1 or 3, comprising at least one of the following features (1)-(24):
(1) the connection layer comprising at least one of polymer, an amorphous carbon material, and a graphitized carbon material;
(2) the buffer layer comprising a hollow carbon material;
(3) the buffer layer comprising the hollow carbon material, wherein the hollow carbon material comprises at least one of a hollow carbon ball, a hollow carbon rod, and a hollow carbon tube;
(4) the buffer layer comprising the hollow carbon material, wherein the hollow carbon material comprises the hollow carbon ball, and a diameter of the hollow carbon ball is 20 nm-2000 nm;
(5) the buffer layer comprising the hollow carbon material, wherein the hollow carbon material comprises the hollow carbon ball, and a wall thickness of the hollow carbon ball is 5 nm-500 nm;
(6) the buffer layer comprising the hollow carbon material, wherein the hollow carbon material comprises the hollow carbon rod, and a diameter of the hollow carbon rod is 10 nm-1000 nm;
(7) the buffer layer comprising the hollow carbon material, wherein the hollow carbon material comprises the hollow carbon rod, and a length of the hollow carbon rod is 100 nm-3000 nm;
(8) the buffer layer comprising the hollow carbon material, wherein the hollow carbon material comprises the hollow carbon rod, and a wall thickness of the hollow carbon rod is 5 nm-500 nm;
(9) the buffer layer comprising the hollow carbon material, wherein the hollow carbon material comprises the hollow carbon tube, and a length of the hollow carbon tube is 30 nm-20 um;
(10) the buffer layer comprising the hollow carbon material, wherein the hollow carbon material comprises the hollow carbon tube, and a wall thickness of the hollow carbon tube is 5 nm-100 nm;
(11) the buffer layer comprising the hollow carbon material, wherein the hollow carbon material comprises the hollow carbon tube, and a diameter of the hollow carbon tube is 20 nm-400 nm;
(12) a ratio of a thickness of the buffer layer to a median particle diameter D50 of the silicon-based active substance is 1:(0.5-10);
(13) the protective layer being coated on a surface of the buffer layer;
(14) the buffer layer comprising the hollow carbon material, wherein at least part of the protective layer is filled in a gap between the hollow carbon materials;
(15) the protective layer comprising at least one of polymer, an amorphous carbon material, and a graphitized carbon material;
(16) a thickness of the connection layer being 5 nm-200 nm;
(17) a thickness of the protective layer being 5 nm-500 nm;
(18) the protective layer comprising the graphitized carbon material, wherein the graphitized carbon material is modified graphene containing a doped element;
(19) the protective layer comprising the graphitized carbon material, wherein the graphitized carbon material is the modified graphene containing a doped element, and the number of layers of the modified graphene is less than 10;
(20) the protective layer comprising the graphitized carbon material, wherein the graphitized carbon material is the modified graphene containing a doped element, and the doped element comprises at least one of oxygen, nitrogen, and sulfur;
(21) the protective layer comprising the graphitized carbon material, wherein the graphitized carbon material is the modified graphene containing a doped element, and a mass content of the doped element in the graphitized carbon material is 1%-20%;
(22) the protective layer comprising the polymer, wherein the polymer comprises at least one of diblock copolymer, triblock copolymer, and multiblock copolymer;
(23) the protective layer comprising the polymer, wherein a mass content of the polymer in the anode material is 1%-20%; and
(24) the protective layer comprising the polymer, wherein the polymer comprises at least one of polyacrylic acid, Polyacrylonitrile, polyimide, Polyurethane, polydopamine, xanthan gum, polypyrrole, polythiophene, polyphenylacetylene, polyaniline, polyacetylene, and tannic acid.

5. An anode material, having a core-shell structure, wherein a core comprises a silicon-based active substance; a housing comprises a connection layer and a protective layer; the connection layer is coated on a surface of the silicon-based active substance; the protective layer comprises a conductive substrate and a hollow carbon material dispersed in the conductive substrate; and an average binding force F between the connection layer and the hollow carbon material is greater than 8 µN.

6. The anode material according to claim 5, comprising at least one of the following features (1)-(21):
(1) the connection layer comprising at least one of polymer, an amorphous carbon material, and a graphitized carbon material;
(2) the hollow carbon material comprising at least one of a hollow carbon ball, a hollow carbon rod, and a hollow carbon tube;
(3) the hollow carbon material comprising the hollow carbon ball, wherein a diameter of the hollow carbon ball is 20 nm-2000 nm;
(4) the hollow carbon material comprising the hollow carbon ball, wherein a wall thickness of the hollow carbon ball is 5 nm-500 nm;
(5) the hollow carbon material comprising the hollow carbon rod, wherein a diameter of the hollow carbon rod is 10 nm-1000 nm;
(6) the hollow carbon material comprising the hollow carbon rod, wherein a length of the hollow carbon rod is 100 nm-3000 nm;
(7) the hollow carbon material comprising the hollow carbon rod, wherein a wall thickness of the hollow carbon rod is 5 nm-500 nm;
(8) the hollow carbon material comprising the hollow carbon tube, wherein a length of the hollow carbon tube is 30 nm-20 um;
(9) the hollow carbon material comprising the hollow carbon tube, wherein a wall thickness of the hollow carbon tube is 5 nm-100 nm;
(10) the hollow carbon material comprising the hollow carbon tube, wherein a diameter of the hollow carbon tube is 20 nm-400 nm;
(11) the protective layer being coated on a surface of the connection layer;
(12) the conductive substrate comprising at least one of polymer, an amorphous carbon material, and a graphitized carbon material;
(13) a thickness of the connection layer being 5 nm-200 nm;
(14) a thickness of the protective layer being 5 nm-500 nm;
(15) the connection layer comprising the graphitized carbon material, wherein the graphitized carbon material is modified graphene containing a doped element;
(16) the connection layer comprising the graphitized carbon material, wherein the graphitized carbon material is the modified graphene containing a doped element, and the number of layers of the modified graphene is less than 10;
(17) the connection layer comprising the graphitized carbon material, wherein the graphitized carbon material is the modified graphene containing a doped element, and the doped element comprises at least one of oxygen, nitrogen, and sulfur;
(18) the connection layer comprising the graphitized carbon material, wherein the graphitized carbon material is the modified graphene containing a doped element, and a mass content of the doped element in the graphitized carbon material is 1%-20%;
(19) the connection layer comprising the polymer, wherein the polymer comprises at least one of diblock copolymer, triblock copolymer, and multiblock copolymer;
(20) the connection layer comprising the polymer, wherein a mass content of the polymer in the anode material is 1%-20%; and
(21) the connection layer comprising the polymer, wherein the polymer comprises at least one of polyacrylic acid, polyacrylonitrile, polyimide, polyurethane, polydopamine, xanthan gum, polypyrrole, polythiophene, polyphenylacetylene, polyaniline, polyacetylene, and tannic acid.

7. The anode material according to any one of claims 1 to 6, comprising at least one of the following features (1)-(12):
(1) the silicon-based active substance being a primary particle;
(2) the silicon-based active substance comprising at least one of Si, SiOₓ, and silicon alloy, wherein 0<x<2;
(3) a median particle diameter of the silicon-based active substance being 0.2 µm-20 µm;
(4) a mass content of carbon in the anode material being 5%-80%;
(5) a mass content of oxygen in the anode material being less than 20%;
(6) a powder tap density of the anode material being 0.2 g/cm³ -1.2 g/cm³;
(7) a powder compaction density of the anode material being 1.2g/cm³ -1.8 g/cm³;
(8) a median particle diameter of the anode material being 0.2 µm-20 µm;
(9) a specific surface area of the anode material being 1.0 m²/g-50 m²/g;
(10) the connection layer and the protective layer both comprising the polymer;
(11) the connection layer and the protective layer both comprising the amorphous carbon material; and
(12) the connection layer and the protective layer both comprising the graphitized carbon material.

8. A method for preparing an anode material, comprising the following steps:
forming a connection layer on a surface of a silicon-based active substance, the connection layer having a modified functional group, so as to obtain a first precursor;
performing a polymerization reaction on a mixed slurry containing the first precursor and a buffer layer material having a surface functional group, and performing drying to obtain a second precursor; and
coating the second precursor to obtain an anode material.

9. The method for preparing an anode material according to claim 8, comprising at least one of the following features (1)-(3):
(1) the silicon-based active substance being a primary particle;
(2) the silicon-based active substance comprising at least one of Si, SiOₓ, and silicon alloy, wherein 0<x<2; and
(3) a median particle diameter of the silicon-based active substance being 0.2 µm-20 µm.

10. The method for preparing an anode material according to claim 8, wherein the step of forming the connection layer on the surface of the silicon-based active substance comprises: in a protective atmosphere, depositing a gas phase carbon source on the surface of the silicon-based active substance by means of vapor deposition, so as to obtain a compound, and using a modified gas to cause a connection layer on a surface of the compound to have a modified functional group.

11. The method for preparing an anode material according to claim 8, wherein the step of forming the connection layer on the surface of the silicon-based active substance comprises: in a protective atmosphere, depositing a gas phase carbon source on the surface of the silicon-based active substance by means of vapor deposition, so as to obtain a compound; and dispersing the compound in a first modified solution containing a first modifying agent, and performing solid-liquid separation and drying to obtain the first precursor.

12. The method for preparing an anode material according to claim 8, wherein the step of forming the connection layer on the surface of the silicon-based active substance comprises: performing spray drying on a mixed coating solution containing the silicon-based active substance and polymer, so as to cause the surface of the silicon-based active substance to form the connection layer, wherein the connection layer comprises the polymer.

13. A secondary battery, comprising the anode material according to any one of claims 1 to 7 or an anode material prepared by the method for preparing an anode material according to any one of claims 8 to 12.
